# EUROPEAN PATENT SPECIFICATION

(11) **EP 0 881 334 B1**
(45) Date of publication and mention of the grant of the patent: **24.11.2004**
(21) Application number: 98109467.5
(22) Date of filing: 25.05.1998
(51) Int. Cl.: E02D 1/00, E02D 17/20, F16L 1/24

(54) **Method for manufacturing a flexible mat-like component for protecting, ballasting and supporting submarine pipelines and cables.**
Herstellungsverfahren eines biegsamen, mattenartigen Körpers für Schutz, Beschwerung und Unterstützung einer Unterwasser-Pipeline oder eines Unterwasserkabels
Méthode de fabrication d'un objet flexible, type matelas, pour la protection, le lestage et le support d'un conduit ou cable sous-marin

(30) Priority: 30.05.1997 IT BO970327
(43) Date of publication of application: 02.12.1998
(73) Proprietor: Ing. Giuseppe Sarti & C. S.p.A., 40136 Bologna (IT)
(72) Inventor: Pavani, Gabriele, 44028 Poggio Renatico, Ferrara (IT)
(74) Representative: Modiano, Guido, Dr.-Ing.

(56) References cited:
- GB-A- 1 276 468
- GB-A- 1 435 123
- GB-A- 1 463 743
- US-A- 4 477 206

## Description

The present invention relates to a method for manufacturing a flexible mat-like component for protecting, ballasting and supporting submarine pipelines and cables.

Components for the specified purpose are already known; they are constituted by a wire net gabion which contains rocks or pebbles subsequently embedded in asphalt cement and is wrapped in a fabric case. These components have lifting elements for handling and installing them.

Conventional components of the above type have some substantial drawbacks, including the limited plasticity of the structure, due to the presence of a double reinforcement net in addition to the considerable dimensions of the rocks to allow subsequent complete filling of voids with the asphalt cement, the onerous work to form the gabion for containing the rocks and pebbles, and the need to provide protections to prevent the metal parts of the component from making contact with the pipelines, triggering galvanic corrosion.

Components are also known which are formed with a bituminous mix which contains gravel pieces measuring no more than approximately 15 mm; however, they have the drawback that when stressed by concentrated permanent loads they deform very slowly but indefinitely, consequently compromising the durability of the component.

GB-A-1 463 743 discloses a stabilising weight for an underwater pipeline which is obtained by pouring aggregate in layers, and laying a wire net reinforcement frame over the last layer poured.

US-A-4 477 206 and GB-A-1 276 468 describe another known flexible mattress-like element used for ballasting and protecting underwater pipe-lines. In US-A-4 477 206 the flexible mattress-like element consists of two similar, superimposed elements. A net reinforcement frame is not positioned in the middle of the mattress-like element.

In GB-A-1 276 468 the netting layers are laied over the previously poured mixture stratum.

The aim of the present invention is to provide a method for manufacturing a mat-like component which is capable of obviating the above-described drawbacks of conventional components.

This aim is achieved with a method for manufacturing a flexible mat-like component for protecting, ballasting and supporting submarine pipelines and cables, characterized in that it comprises the following steps: lining with a case the internal space of a component forming box; positioning, inside said internal space thus lined, a wire net reinforcement frame which lies on an intermediate plane parallel to the bottom of said space; introducing in said space a premixed filler material, composed of a rock aggregate whose dimensions are such that it passes through the meshes of said net and of an asphalt cement, until the set final level is reached, embedding said frame; and covering said filler material with said case.

Further characteristics and advantages of the present invention will become apparent from the following description of a preferred embodiment, illustrated only by way of non-limitative example in the accompanying drawings, wherein:
Figure 1 is a partially sectional perspective view of a component according to the present invention;

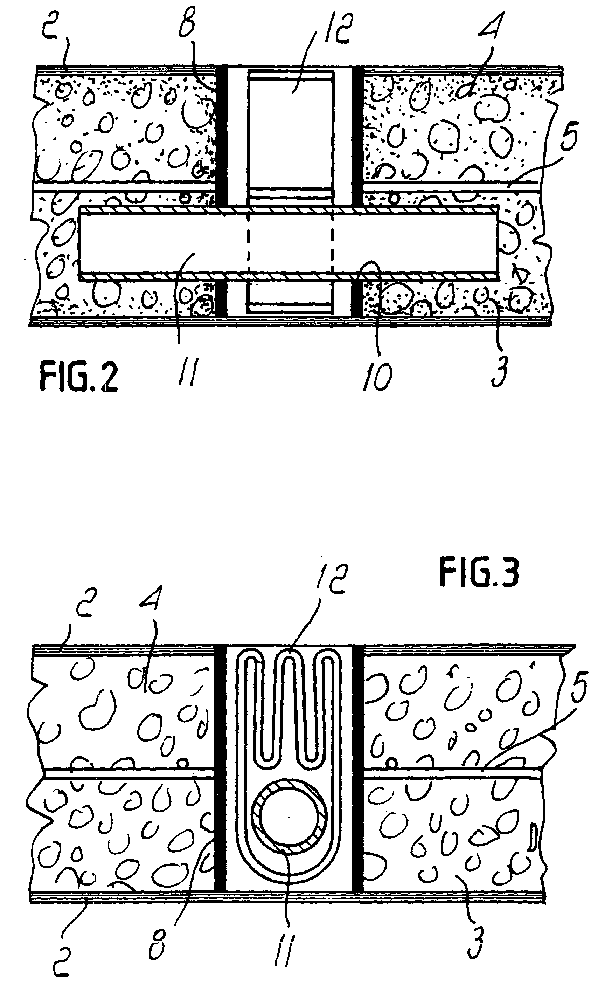

Figure 2 is a sectional view of an element for lifting the component;
Figure 3 is a sectional view of a lifting element of Figure 2, rotated by 90°;
Figure 4 is a sectional view of the component of Figure 1, arranged so as to straddle a pipeline;
Figure 5 is a partially sectional perspective view of a different embodiment of the component according to the invention;
Figure 6 is a partially sectional perspective view of a different embodiment which comprises the stacking of two components according to the invention;
Figure 7 is a sectional view of the element of Figure 6, arranged so as to straddle a pipeline;
Figure 8 is a sectional view of a lifting element according to another embodiment;
Figure 9 is a sectional view of the lifting element of Figure 8, rotated by 90°; and
Figure 10 is a plan view of the lifting element of Figures 8 and 9.

In the figures, the reference numeral 1 generally designates the flexible component according to the invention. Said component is constituted by an outer case 2 which is advantageously constituted, for example, by a geotextile fabric. Inside the case 2 a layer of a filler material is provided which, for the sake of convenience in description, is assumed to be ideally divided into two layers 3 and 4. A reinforcement frame 5, made of wire net or of another sufficiently strong material, is embedded between the layers 3 and 4. The layers 3 and 4 have substantially the same thickness so that the net 5 lies on a plane coinciding with the central plane of the component, is co-planar to the upper and lower faces and coincides with the neutral plane whereon no tension and compression stresses are present when the component flexes.

Advantageously, the net 5 is constituted by a net with double-twist hexagonal meshes which, in order to achieve reduced elongation, are orientated so that the mesh portions formed by the twisted wires form the longitudinal direction of the component.

The filler material is preferably constituted by a rock aggregate 6 with medium piece size, premixed while hot with asphalt cement 6a of the hydraulic type which has a fluid consistency at a temperature of 150-180°C, while the mixture with the rock aggregate has a consistency which tends to self-level and then becomes plastics at ambient temperature and at the temperatures used on sea floors.

The method for manufacturing the component entails introducing the filler material, which has already been mixed while hot with adapted equipment all at once, in a rectangular prism-like forming box which is internally lined with a fabric case and in which a wire net reinforcement frame has been positioned beforehand halfway along its vertical extension.

The frame has meshes whose dimensions allow the rock aggregate to pass through it, together with the cement, in order to first fill the part of the forming box that lies below the frame and then the part that lies above said frame.

The rock aggregate gives the component, after installation, the ability to withstand impacts, such as the accidental dropping of an anchor, and to withstand the formation of impressions if subjected to permanent loads, in addition to giving it a high relative density which is useful for ballasting pipelines.

Flexibility is thus improved considerably with respect to conventional components and the structure is more uniform and compact. During the manufacture of the component, the entire asphalt mix (rock aggregate and asphalt cement) is in fact poured while hot into the container, avoiding the formation of residual voids, while after laying and leveling, until the mix has cooled enough, a slight flow towards the surface of the asphalt cement allows to form an upper surface which is capable of bonding with the outer case.

In a preferred embodiment, the rock aggregate that composes the filler material constitutes 40-50% of the volume of the component and the rest is constituted by the asphalt cement.

Preferably, the rock aggregate is formed by round calcareous gravel having a piece size of 30-40 mm, in any case not greater than the size of the mesh of the wire net.

By way of example, the asphalt cement to be used to bind the rock aggregate can have a composition including 67-74% by weight of sand and sand mix with 0 to 3 mm grain size; 10-15% by weight of a calcareous filler (Portland cement, hydrated lime, calcareous powder); 16-20% by weight of a binder which is constituted by bitumen which has a variable penetration according to the situations or is modified with plastomers and elastomers or receives the addition of any adapted material.

In order to facilitate the flexibility of the component, its thickness, which is equal to the sum of the layers 3 and 4, should conveniently not exceed 25-30 cm.

It should be observed that the reinforcement frame arranged on the central plane can be constituted by two or more nets of any material, provided that it is sufficiently flexible and strong.

In order to allow transport, handling and installation, the component is provided with a plurality of lifting elements 7.

Each element is composed of a segment of rubber tube 8 whose diameter is such that it passes through the net 5. The tube 8 rests on the lower face of the case 2 and its top protrudes through an opening 9 of the upper face of said case.

Two diametrically opposite holes 10 are formed in the portion of the tube 8 that remains embedded in the lower layer 3 arranged below the net 5; a piece of tube 11 is driven through said holes, acts as a retention pin and is tangent to the mesh 5 in an upward region.

A flexible belt 12 is passed around the portion of the retention pin 11 that lies inside the tube 8; said belt is made for example of fibers or the like, is closed in a loop and is folded so as to fit inside the tube 8 when the component is being formed.

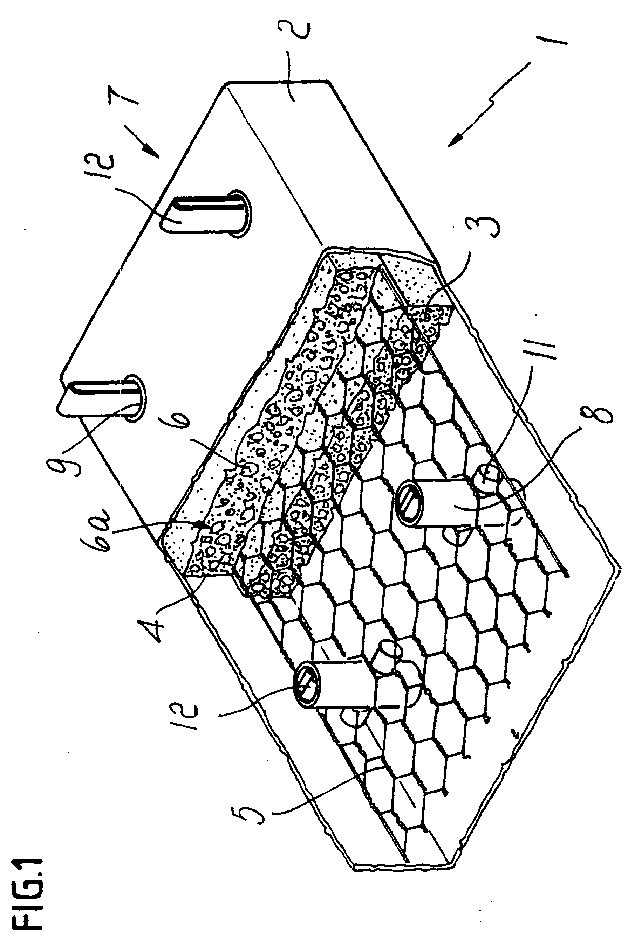

As shown in Figure 1, the belts 12 can be extracted from the tube 8 and thus provide coupling points for lifting hooks by means of which the component can be handled during transport and installation.

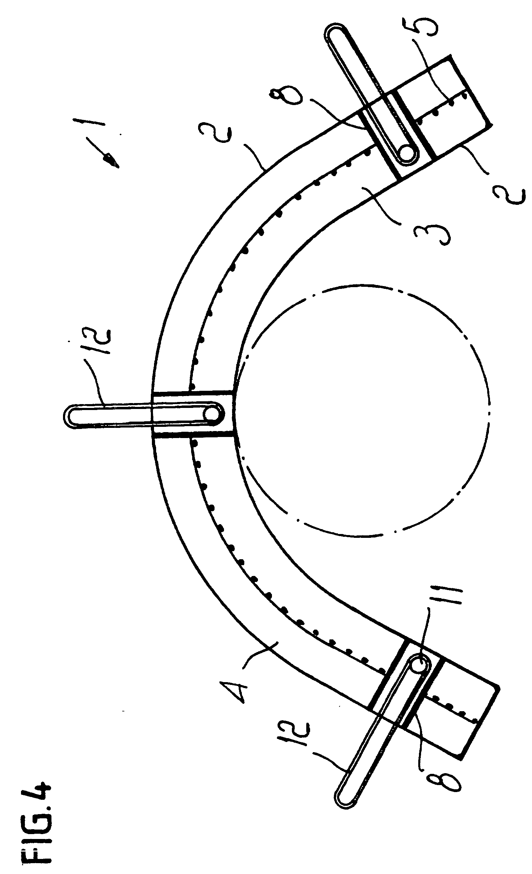

It is evident that the described component perfectly achieves the intended aim and objects. In particular, the bituminous mix gives the component considerable flexibility and plasticity, which allow it to wrap around the pipeline or cables in order to protect them or secure them to sea floors. As shown in Figure 4, once the component has been deposited onto the pipeline to be ballasted and protected, it flexes and mates with the shape of the pipeline due to its own weight.

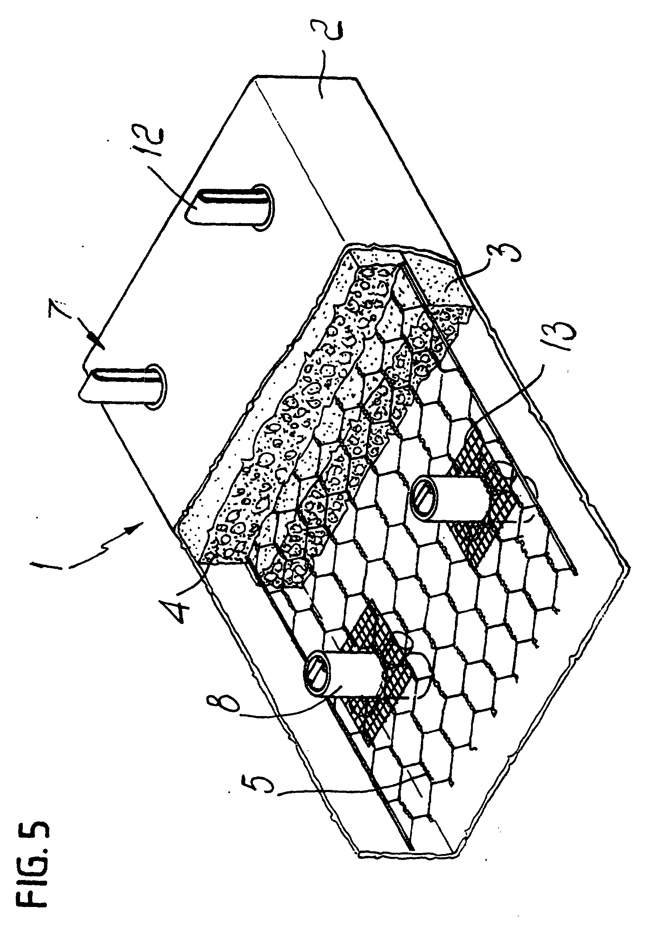

Figure 5 illustrates an embodiment in which a stress distribution element, constituted for example by a square portion of electrically welded net 13, is interposed between the tube portion 11 and the net 5 at the lifting elements.

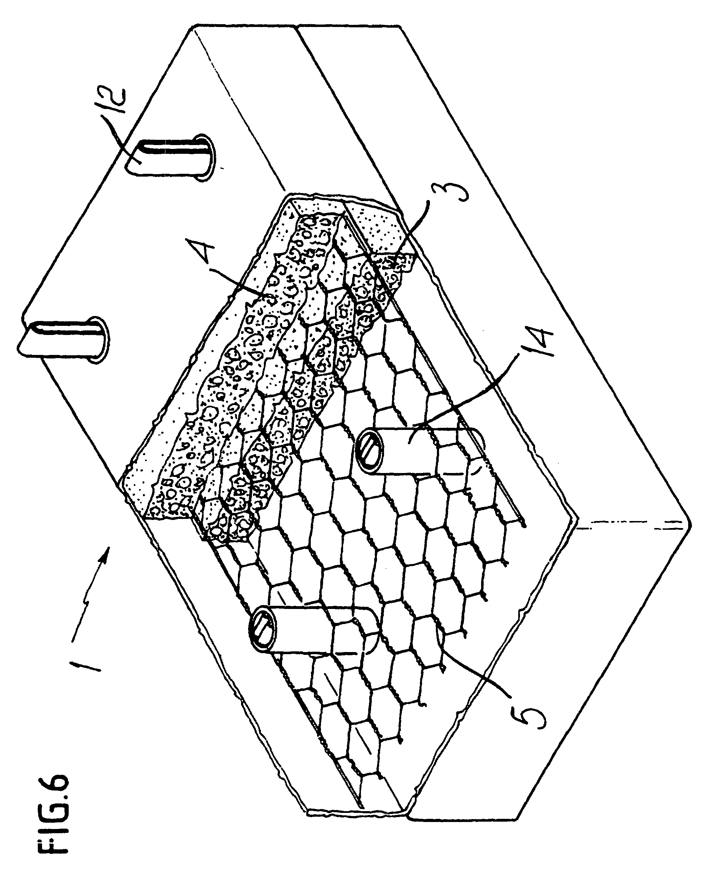

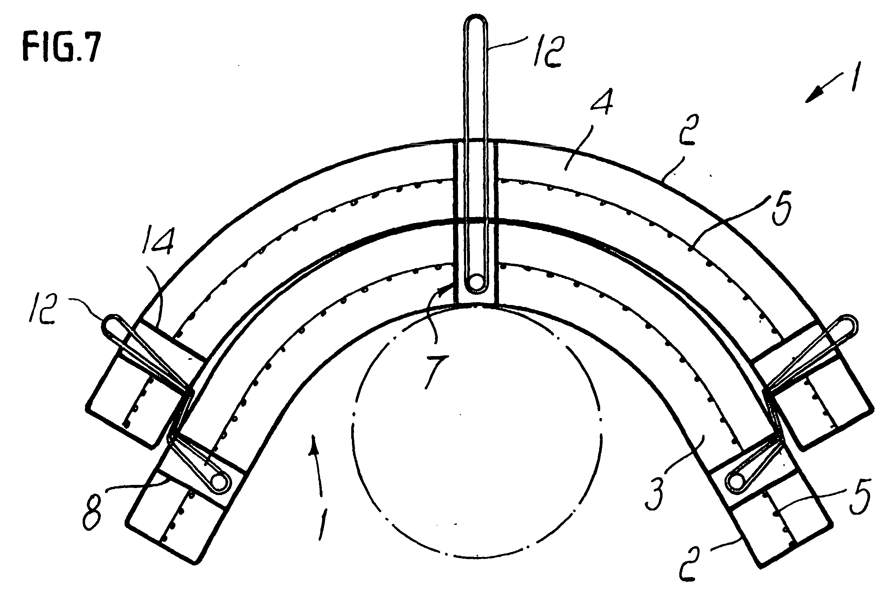

When the thickness required is considerably greater due to weight reasons, it is possible to stack two components in a single structure. In this case, as shown in Figures 6 and 7, the upper component has two tube segments 14 made of rubber-like material to allow the passage of the loops 12.

The lifting elements are often required not to have protruding parts in which fishing nets, particularly of the trawl type, might catch when the component is submerged on the sea floor and straddles a pipeline.

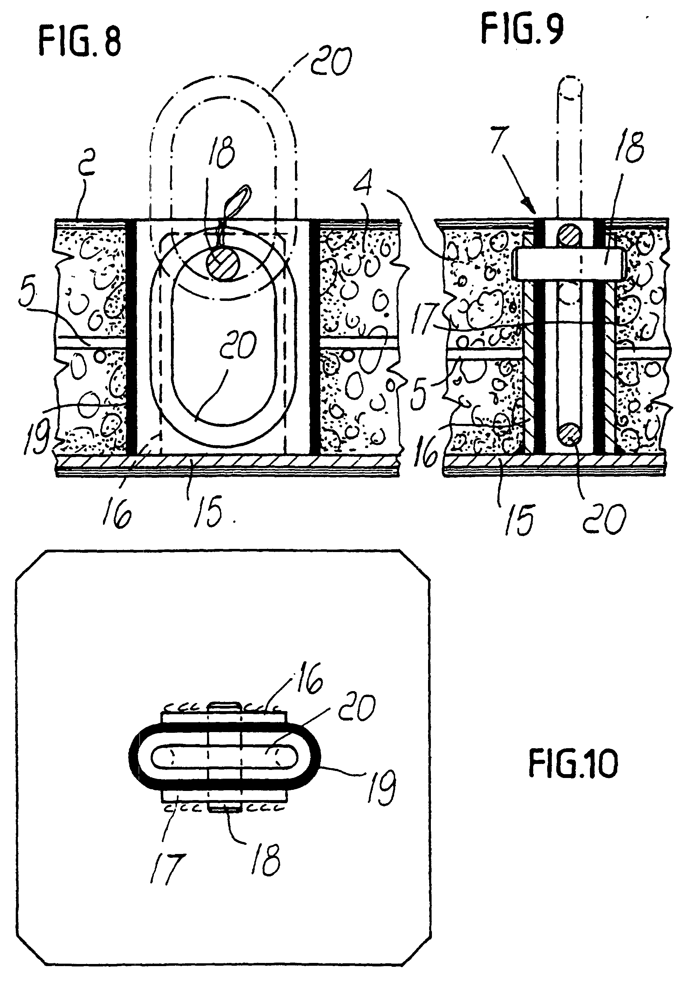

Figures 8-10 illustrate a solution to this problem which entails anchoring, in the layers 3 and 4, an element which is composed of a plate 15 from which two parallel plates 16 and 17 rise; a flat tubular rubber segment 19 is fixed between said plates by means of a retention pin 18. A metal ring 20 is coupled to the retention pin 18 inside the segment 19, at the upper layer 4. The ring 20 is capable of assuming a position which is internal or external with respect to the tubular segment 19. In the internal position, it rests on the retention pin 18 and is fully recessed in the component, so that it does not offer catching points of any kind. In the external position, the ring 20 protrudes from the tubular segment 19 so that it can be engaged by lifting hooks.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for manufacturing a flexible mat-like component (1) for protecting, ballasting and supporting submarine pipelines and cables, **characterized in that** it comprises the following steps: lining with a case (2) the internal space of a component forming box; positioning, inside said internal space thus lined, a wire net reinforcement frame (5) which lies on an intermediate plane parallel to the bottom of said space; introducing in said space a premixed filler material (3, 4), composed of a rock aggregate (6) whose dimensions are such that it passes through the meshes of said net and of an asphalt cement (6a), until a level equal to the final thickness of the component is reached, embedding said frame (5); and covering said filler material with said case.

2. The method according to claim 1, **characterized in that** it is provided a single layer of a filler material (3, 4), ideally divided by the frame (5) into two layers, composed of a rocky material (6) premixed while hot with an asphalt cement (6a) allowing thus a certain flexibility of said layer; the case (2) wrapped around said layer is rigidly coupled thereto; elements for lifting said component (1) are anchored to said reinforcement frame (5).

3. The method according to claim 1, **characterized by** forming said rock aggregate (6) by round calcareous gravel with a piece size of 30-40 mm.

4. The method according to one of claims 2 and 3, **characterized by** using the asphalt cement (6a) having a composition which includes: 67-74% by weight of sand and sand mix with 0 to 3 mm grain size; 10-15% by weight of a calcareous fuller, for example Portland cement, hydrated lime, calcareous powder and 16-20% by weight of a binder constituted by bitumen.

5. The method according to one of claims 2-4, **characterized by** providing said lifting element as a rubber tube segment (8) whose diameter allows it to pass through the wire net (5) and whose top end opens onto the upper face of said case (2), providing two diametrically opposite holes (10) in the portion of said tube that remains embedded in the portion of the layer which lies below the frame (5), a portion of tube (11) which acts as retention pin being driven through said holes, said retention pin being tangent to said net (5) in an upward region, a flexible belt (12) being guided around said retention pin, said belt being closed in a loop and being adapted to be folded so as to be accommodated inside said tube (8) when the component (1) is being formed.

6. The method according to one of claims 2-5, **characterized in that** it entails interposing, between the tube portion (11) that acts as retention pin and said net (5), a stress distribution element (13) constituted for example by an electrically welded net.

7. A method according to one of claims 2-6, **characterized by** stacking two components (1) whereby the upper component has tube segments (14) made of rubberlike material in order to allow the passage of the lifting elements.

8. The method according to one of claims 2 to 4, **characterized by** providing said lifting element as a tubular segment (19) made of rubber which is connected to an anchoring plate (15), is embedded in said layer of filler material (3, 4) and crossed by a retention pin (18) whereto a metal ring (20) is coupled, said ring (20) being able to assume an inactive position, which lies inside the tubular segment (19) and in which it rests on the retention pin (18) and is fully recessed in the component (1), and an external position, in which the ring protrudes from the tubular segment (19) so that it can be engaged by lifting hooks.

9. A method according to claim 1, **characterized in that** the bituminous filler mix is used at a temperature of 150-180°.

## Patentansprüche

1. Ein Verfahren zur Herstellung einer flexiblen mattenartigen Komponente (1) zum Schützen, Belasten und Stützen von Unterseerohrleitungen und -kabeln, **dadurch gekennzeichnet, dass** es die folgenden Schritte umfasst: Verkleiden des Innenraums eines komponentenbildenden Kastens mit einer Ummantelung (2); Positionierung, in dem so ausgekleideten Innenraum, eines Verstärkungsrahmens (5) aus Drahtgewebe, der auf einer Zwischenebene parallel zum Boden des Raums liegt; Einfüllen eines vorgemischten Füllmaterials (3, 4) in den Raum, das aus einem Steinaggregat (6) besteht, das solche Maße hat, dass es durch die Maschen des Netzes passt, und einem Asphaltzement (6a), bis eine Höhe gleich der endgültigen Dicke der Komponente erreicht ist, wobei der Rahmen (5) einbettet wird; und Bedecken des Füllmaterials mit der Ummantelung.

2. Das Verfahren gemäß Anspruch 1, **dadurch gekennzeichnet, dass** eine einzelne Schicht bereitgestellt wird, die idealerweise vom Rahmen (5) in zwei Schichten (3, 4) eines Füllmaterials unterteilt wird, das aus einem steinigen Material (6) besteht, das in heißem Zustand mit einem Asphaltzement (6a) vorgemischt wird, wodurch eine gewisse Flexibilität der Schicht gestattet wird; wobei die Ummantelung (2), die die Schicht umgibt, damit starr verbunden ist; wobei Elemente zur Anhebung der Komponente (1) an dem Verstärkungsrahmen (5) verankert sind.

3. Das Verfahren nach Anspruch 1, **dadurch gekennzeichnet, dass** das Steinaggregat (6) aus rundem kalkhaltigem Kies mit einer Stückgröße von 30-40 mm besteht.

4. Das Verfahren nach einem der Ansprüche 2 und 3, **gekennzeichnet durch** Verwendung des Asphaltzements (6a) mit einer Zusammensetzung, die folgendes einschließt: 67-74 Gewichtsprozent Sand und Sandmischung mit 0 bis 3 mm Korngröße; 10-15 Gewichtsprozent eines kalkhaltigen Fullers (zum Beispiel Portlandzement, Kalkhydrat, kalkhaltiges Pulver) und 16-20 Gewichtsprozent eines Bindemittels, das aus Bitumen gebildet ist.

5. Das Verfahren nach einem der Ansprüche 2-4, **dadurch gekennzeichnet, dass** das Anhebe-Element als Gummischlauchsegment (8) bereitgestellt wird, dessen Durchmesser es ihm gestattet, durch das Drahtgewebe (5) zu passen, und dessen oberes Ende sich zur Oberseite der Ummantelung (2) hin öffnet, wobei das Anhebe-Element zwei diametral entgegengesetzte Löcher (10) in dem Abschnitt des Schlauchs aufweist, der in den Abschnitt der Schicht eingebettet bleibt, der unterhalb des Rahmens (5) liegt, wobei ein Abschnitt des Schlauchs (11), der als Arretierstift dient, durch die Löcher getrieben wird, wobei der Arretierstift das Gewebe (5) in einem oberen Bereich tangiert, wobei ein flexibler Riemen (12) um den Arretierstift herum geführt wird, wobei der Riemen in einer Schlaufe geschlossen ist und angepasst ist, um derart gefaltet zu werden, dass er in den Schlauch (8) aufgenommen wird, wenn die Komponente (1) gebildet wird.

6. Das Verfahren nach einem der Ansprüche 2-5, **dadurch gekennzeichnet, dass** es das Einsetzen, zwischen dem Schlauchabschnitt (11), der als Arretierstift wirkt, und dem Gewebe (5), eines Spannungsverteilungselements (13) mit sich bringt, das zum Beispiel aus einem elektrisch geschweißten Netz bestehen kann.

7. Ein Verfahren nach einem der Ansprüche 2-6, **gekennzeichnet durch** das Stapeln von zwei Komponenten (1), wodurch die obere Komponente Schlauchsegmente (14) aus gummiähnlichem Material hat, um die Durchführung der Anhebe-Elemente zu ermöglichen.

8. Das Verfahren nach einem der Ansprüche 2 bis 4, **gekennzeichnet durch** das Bereitstellen des Anhebe-Elements als rohrförmiges Segment (19) aus Gummi, das mit einer Ankerplatte (15) verbunden ist, das in die Schicht von Füllmaterial (3, 4) eingebettet ist und das von einem Arretierstift (18) gekreuzt wird, mit dem ein Metallring (20) verbunden ist, wobei der Ring (20) in der Lage ist, eine inaktive Position einzunehmen, die innerhalb des rohrförmigen Segments (19) liegt und in der er auf dem Arretierstift (18) ruht und ganz in die Komponente (1) eingesenkt wird, und eine externe Position, in der der Ring aus dem rohrförmigen Segment (19) herausragt, so dass er in Lasthaken eingehakt werden kann.

9. Ein Verfahren nach Anspruch 1, **dadurch gekennzeichnet, dass** die bituminöse Füllstoffmischung bei einer Temperatur von 150-180° verwendet wird.

## Revendications

1. Procédé pour fabriquer un composant flexible (1) en forme de matelas pour protéger, ballaster et supporter des pipelines et des câbles sous-marins, **caractérisé en ce qu'**il inclut les étapes suivantes, consistant à : délimiter au moyen d'une garniture (2) le volume interne d'une boîte de formation du composant ; positionner, au sein dudit volume interne ainsi délimité, une structure de renforcement (5) à base d'un réseau de câbles qui repose sur un plan intermédiaire parallèle au fond dudit espace ; introduire dans ledit espace un matériau de remplissage préalablement mélangé (3, 4), composé de fragments de roche (6) dont les dimensions sont telles qu'ils passent au travers des mailles dudit réseau et d'un ciment à base d'asphalte (6a), jusqu'à ce qu'un niveau égal à l'épaisseur finale du composant soit atteint, noyant ladite structure (5) ; et recouvrir ledit matériau de remplissage avec ladite garniture.

2. Procédé selon la revendication 1, **caractérisé en ce qu'**une unique couche de matériau de remplissage (3, 4) est prévue, idéalement divisée par la structure (5) en deux couches, composée d'un matériau rocheux (6) préalablement mélangé à chaud avec un ciment à base d'asphalte (6a) autorisant ainsi une certaine flexibilité de ladite couche ; la garniture (2) enveloppée autour de ladite couche y étant liée de manière rigide ; des éléments de levage dudit composant étant ancrés dans ladite structure de renforcement (5).

3. Procédé selon la revendication 1, **caractérisé en ce que** les fragments de roche (6) sont formés par du gravier calcaire rond ayant un calibre de 30-40mm.

4. Procédé selon l'une des revendications 2 ou 3, **caractérisé par** l'utilisation du ciment à base d'asphalte (6a) ayant une composition qui inclut : 67-74% en poids de sable et mélange de sable avec une taille de grain allant de 0 à 3 mm ; 10-15% en poids d'un complément calcaire (par exemple du ciment de Portland, de la chaux hydratée, de la poudre de calcaire) et 16-20% en poids d'un liant constitué par du bitume.

5. Procédé selon l'une des revendications 2 à 4, **caractérisé en ce que** ledit élément de levage est un segment de tube en caoutchouc (8) dont le diamètre l'autorise à passer au travers du réseau de câbles (5) et dont l'extrémité supérieure débouche dans la surface supérieure de la garniture (2), produisant deux trous diamétralement opposés (10) dans la portion dudit tube qui reste noyée dans la portion de la couche qui repose sous la structure (5), une portion du tube (11) qui agit comme une goupille de rétention étant introduite au travers desdits trous, ladite goupille de rétention étant tangente audit réseau (5) dans une région supérieure, une courroie flexible (12) étant guidée autour de ladite goupille de rétention, ladite courroie étant fermée en une boucle et étant apte à être pliée de manière à être disposée à l'intérieur dudit tube (8) lorsque le composant (1) est en cours de fabrication.

6. Procédé selon l'une des revendications 2 à 5, **caractérisé en ce qu'**il implique une interposition, entre la portion de tube (11) qui agit comme une goupille de rétention et ledit réseau (5), un élément distributeur de tension (13) constitué par exemple par un réseau soudé électriquement.

7. Procédé selon l'une des revendications 2 à 6, **caractérisé par** la réalisation d'un empilement de deux composants (1) dans lequel le composant supérieur est muni de segments de tube (14) réalisés en un matériau caoutchouteux dans le but d'autoriser le passage des éléments de levage.

8. Procédé selon l'une des revendications 2 à 4, **caractérisé en ce que** l'élément de levage est un segment tubulaire (19) réalisé en caoutchouc qui est relié à une plaque de fixation (15), noyé dans ladite couche de matériau de remplissage (3, 4) et traversé par une goupille de rétention (18) avec laquelle un anneau métallique (20) est couplé, ledit anneau (20) étant apte à prendre une position inactive, qui réside à l'intérieur du segment tubulaire (19) et dans laquelle l'anneau repose sur la goupille de rétention (18) et est entièrement contenu dans le composant (1), et une position externe, dans laquelle l'anneau dépasse du segment tubulaire (19) afin qu'il puisse être traversé par des crochets de levage.

9. Procédé selon la revendication 1, **caractérisé en ce que** le mélange de remplissage bitumineux est utilisé à une température de 150-180°.
